# EUROPEAN PATENT APPLICATION

(11) **EP 4 691 256 A1**
(43) Date of publication of application: **11.02.2026**
(21) Application number: 24780419.8
(22) Date of filing: 27.03.2024
(51) Int. Cl.: A23L 2/00, A23C 11/10, A23F 3/16, A23F 5/24, A23G 1/56, A23L 2/38, A23L 2/52, A23L 11/60, A23L 11/65

(54) **BEVERAGE COMPOSITION, BEVERAGE, METHOD FOR PRODUCING BEVERAGE, AND METHOD FOR IMPROVING FLAVOR AND BODY**

(30) Priority: 27.03.2023 JP 2023049937
(71) Applicant: Mitsubishi Chemical Corporation, Tokyo 100-8251 (JP)
(72) Inventor: HARA Hideyuki, Tokyo 100-8251 (JP)
(74) Representative: Ter Meer Steinmeister & Partner
(86) International application number: PCT/JP2024/012189
(87) International publication number: WO 2024/204313

(57) **Abstract**

In order to provide a technique that can improve milk flavor and body of a beverage without using an animal-derived ingredient such as a dairy ingredient, the present invention provides a beverage composition comprising a polysaccharide degradation product, a vegetable oil or fat, and an alkali metal element, wherein a content of the polysaccharide degradation product is 1.0% by weight or more, 0.005 to 0.2 parts by weight of the alkali metal element are contained with respect to 1 part by weight of the polysaccharide degradation product, 0.0008 parts by weight or more and 0.030 parts by weight or less of magnesium are contained with respect to 1 part by weight of the polysaccharide degradation product, and no animal-derived ingredient is contained, or a content thereof is 0.5% by weight or less.

## Description

### Technical Field

The present disclosure relates to a beverage composition, a beverage, a method for producing a beverage, and a method for improving flavor and body. More specifically, the present disclosure relates to a beverage composition and the like that can improve milk flavor and body of a beverage without using an animal-derived ingredient such as a dairy ingredient.

### Background Art

Vegetable milk substitute beverages (plant-based milk) have widespread in recent years against the backdrop of increasing awareness about reduction of environmental burdens, a growing number of vegetarians, and the like. Plant ingredients including beans and nuts such as soybean, almond, coconut, and soybean are mainly used as ingredients for plant-based milk. However, plant-based milk is unfortunately weak in milk flavor and body and has poorer flavor and body than those of cow milk.

As for a technique for enhancing milk flavor and body of a beverage, Patent Literature 1 describes a powder oil or fat composition for conferring milk flavor, containing (A) a lauric acid-based oil or fat, (B) an emulsifier, (C) an excipient, and (D) water. This technique is reportedly capable of enhancing milk flavor of a food or drink product supplemented with a dairy ingredient, such as coffee, black tea, or cocoa with milk. Here, it is said that purified coconut oil, purified palm kernel oil, hydrogenated coconut oil, or processed coconut-palm mixture oil or fat can be used as the lauric acid-based oil or fat, and gum arabic, processed starch, dextrin, trehalose, a sugar alcohol, Palatinit, hydrogenated starch hydrolysate, a starch degradation product having DE (dextrose equivalent) of 20 or more, gelatin, a protein hydrolysate, a polysaccharide thickener, or cyclodextrin can be used as the excipient.

However, the technique described in Patent Literature 1 is not directed to enhancing milk flavor of a food or drink product, such as plant-based milk, supplemented with no dairy ingredient in the first place. The addition of an animal-derived ingredient such as a dairy ingredient to plant-based milk for the purpose of improving milk flavor or body contradicts reduction of environmental burdens, vegetarianism, and the like which are the backgrounds of prevalence thereof. Therefore, such an approach is difficult to adopt under these circumstances.

### Citation List

### Patent Literature

Patent Literature 1: Japanese Patent Laid-Open No. 2016-054670

### Summary of Invention

### Technical Problem

An object of the present disclosure is to provide a technique that can improve milk flavor and body of a beverage without using an animal-derived ingredient such as a dairy ingredient.

### Solution to Problem

In order to attain the object, the present disclosure provides the following [1] to [42].
[1] A beverage composition comprising a polysaccharide degradation product, a vegetable oil or fat, and an alkali metal element, wherein a content of the polysaccharide degradation product with respect to the total weight is 1.0% by weight or more, 0.005 to 0.2 parts in total of the alkali metal element are contained with respect to 1 part by weight of the polysaccharide degradation product, 0.0008 parts by weight or more and 0.030 parts or less of magnesium are contained with respect to 1 part by weight of the polysaccharide degradation product, and a content of an animal-derived ingredient with respect to the total weight is 0.5% by weight or less.
   [1A] The beverage composition according to [1], wherein 0.20 to 3.0 parts by weight of the vegetable oil or fat are contained with respect to 1 part by weight of the polysaccharide degradation product.
   [1B] The beverage composition according to [1] or [1A], wherein a ratio of the magnesium to 1 part by weight of the alkali metal element is 0.035 to 0.30 parts by weight.
[2] The beverage composition according to any of [1] to [1B], wherein the alkali metal element is sodium and/or potassium.
[3] The beverage composition according to any of [1] to [2], wherein the alkali metal element contains sodium and potassium and contains 0.1 to 5 parts by weight of potassium with respect to 1 part by weight of sodium.
[4] The beverage composition according to any of [1] to [3], wherein 0.0015 parts or more of magnesium are contained with respect to 1 part by weight of the polysaccharide degradation product.
[5] The beverage composition according to any of [1] to [4], wherein no plant-derived protein is contained, or 0.1 parts by weight or less of a plant-derived protein are contained with respect to 1 part by weight of the polysaccharide degradation product.
[6] The beverage composition according to any of [1] to [5], wherein a weight-average molecular weight of the polysaccharide degradation product is 1,500 to 18,000.
[7] The beverage composition according to [6], wherein the polysaccharide degradation product is dextrin, indigestible dextrin, reduced indigestible dextrin, and/or isomaltodextrin.
[8] The beverage composition according to any of [1] to [7], wherein a saturated fatty acid content of the vegetable oil or fat is 60% or more.
[9] The beverage composition according to [8], wherein the vegetable oil or fat is coconut oil, palm kernel oil, and/or a hydrogenated, transesterified, or sorted form thereof.
[10] The beverage composition according to any of [1] to [9], further comprising an emulsifier.
[11] The beverage composition according to [10], wherein the emulsifier is sucrose fatty acid ester and/or polyglycerin fatty acid ester.
[12] The beverage composition according to any of [1] to [11], wherein the beverage is plant-based milk, tea, coffee, or cocoa.
[13] The beverage composition according to any of [1] to [12], wherein the beverage composition is an improver for flavor and body of a beverage.
[14] A beverage comprising a beverage composition according to any of [1] to [13].
[15] The beverage according to [13], wherein a content of the vegetable oil or fat with respect to the total weight is 1 to 5% by weight.
[16] The beverage according to [14] or [15], wherein the beverage is plant-based milk, tea, coffee, or cocoa.
[17] A method for producing a beverage, comprising the step of mixing a beverage composition with an ingredient,
   the beverage composition being a beverage composition comprising a polysaccharide degradation product, a vegetable oil or fat, and an alkali metal element, wherein a content of the polysaccharide degradation product with respect to the total weight is 1.0% by weight or more, 0.005 to 0.2 parts in total of the alkali metal element are contained with respect to 1 part by weight of the polysaccharide degradation product, and 0.0008 parts by weight or more and 0.030 parts or less of magnesium are contained with respect to 1 part by weight of the polysaccharide degradation product.
[18] A method for improving flavor and body of a beverage, comprising the step of mixing a beverage composition with the beverage or an ingredient thereof, the beverage composition being a beverage composition comprising a polysaccharide degradation product, a vegetable oil or fat, and an alkali metal element, wherein a content of the polysaccharide degradation product with respect to the total weight is 1.0% by weight or more, 0.005 to 0.2 parts in total of the alkali metal element are contained with respect to 1 part by weight of the polysaccharide degradation product, 0.0008 parts by weight or more and 0.030 parts or less of magnesium are contained with respect to 1 part by weight of the polysaccharide degradation product, and a content of an animal-derived ingredient with respect to the total weight is 0.5% by weight or less.
   [18A] The method according to [17] or [18], wherein the beverage composition contains 0.20 to 3.0 parts by weight of the vegetable oil or fat with respect to 1 part by weight of the polysaccharide degradation product.
   [18B] The method according to any of [17] to [18A], wherein a ratio of the magnesium to 1 part by weight of the alkali metal element in the beverage composition is 0.035 to 0.30 parts by weight.
[19] The method according to any of [17] to [18B], wherein the alkali metal element is sodium and/or potassium.
[20] The method according to any of [17] to [19], wherein the beverage composition contains sodium and potassium and contains 0.1 to 5 parts by weight of potassium with respect to 1 part by weight of sodium.
[21] The method according to any of [17] to [20], wherein the beverage composition contains 0.0015 parts or more of magnesium with respect to 1 part by weight of the polysaccharide degradation product.
[22] The method according to any of [17] to [21], wherein the beverage composition contains no plant-derived protein or contains 0.1 parts by weight or less of a plant-derived protein with respect to 1 part by weight of the polysaccharide degradation product.
[23] The method according to any of [17] to [22], wherein a weight-average molecular weight of the polysaccharide degradation product is 1,500 to 18,000.
[24] The method according to [23], wherein the polysaccharide degradation product is dextrin, indigestible dextrin, reduced indigestible dextrin, and/or isomaltodextrin.
[25] The method according to any of [17] to [24], wherein a saturated fatty acid content of the vegetable oil or fat is 60% or more.
[26] The method according to [25], wherein the vegetable oil or fat is coconut oil, palm kernel oil, and/or a hydrogenated, transesterified, or sorted form thereof.
[27] The method according to any of [17] to [26], wherein the beverage composition further comprises an emulsifier.
[28] The method according to [27], wherein the emulsifier is sucrose fatty acid ester and/or polyglycerin fatty acid ester.
[29] The method according to any of [17] to [28], wherein the beverage is plant-based milk, tea, coffee, or cocoa.
[30] A beverage, preferably, a milk substitute beverage, which is a beverage composition comprising a polysaccharide degradation product, a vegetable oil or fat, and an alkali metal element, wherein a content of the polysaccharide degradation product with respect to the total weight is 1.0% by weight or more, 0.005 to 0.2 parts in total of the alkali metal element are contained with respect to 1 part by weight of the polysaccharide degradation product, 0.0008 parts by weight or more and 0.030 parts or less of magnesium are contained with respect to 1 part by weight of the polysaccharide degradation product, and a content of an animal-derived ingredient with respect to the total weight is 0.5% by weight or less.
   [30A] The beverage according to [30], wherein 0.20 to 3.0 parts by weight of the vegetable oil or fat are contained with respect to 1 part by weight of the polysaccharide degradation product.
   [30B] The beverage according to [30] or [30A], wherein a ratio of the magnesium to 1 part by weight of the alkali metal element is 0.035 to 0.30 parts by weight.
[31] The beverage according to any of [30] to [30B], wherein the alkali metal element is sodium and/or potassium.
[32] The beverage according to any of [30] to [31], wherein the alkali metal element contains sodium and potassium and contains 0.1 to 5 parts by weight of potassium with respect to 1 part by weight of sodium.
[33] The beverage according to any of [30] to [32], wherein 0.0015 parts or more of magnesium are contained with respect to 1 part by weight of the polysaccharide degradation product.
[34] The beverage according to any of [30] to [33], wherein no plant-derived protein is contained, or 0.1 parts by weight or less of a plant-derived protein are contained with respect to 1 part by weight of the polysaccharide degradation product.
[35] The beverage according to any of [30] to [34], wherein a weight-average molecular weight of the polysaccharide degradation product is 1,500 to 18,000.
[36] The beverage according to [35], wherein the polysaccharide degradation product is dextrin, indigestible dextrin, reduced indigestible dextrin, and/or isomaltodextrin.
[37] The beverage according to any of [30] to [36], wherein a saturated fatty acid content of the vegetable oil or fat is 60% or more.
[38] The beverage according to [37], wherein the vegetable oil or fat is coconut oil, palm kernel oil, and/or a hydrogenated, transesterified, or sorted form thereof.
[39] The beverage according to any of [30] to [38], further comprising an emulsifier.
[40] The beverage according to [39], wherein the emulsifier is sucrose fatty acid ester and/or polyglycerin fatty acid ester.
[41] The beverage according to any of [30] to [40], wherein a content of the vegetable oil or fat with respect to the total weight is 1 to 5% by weight.
[42] The beverage according to any of [30] to [41], wherein the beverage is plant-based milk, tea, coffee, or cocoa.

### Advantageous Effects of Invention

The present disclosure provides a technique that can improve milk flavor and body of a beverage without using an animal-derived ingredient such as a dairy ingredient.

### Description of Embodiments

Hereinafter, a preferred mode for carrying out the present disclosure will be described. Embodiments described below illustrate examples of representative embodiments of the present disclosure, and the scope of the present disclosure should not be interpreted as being narrower by these embodiments.

### [Beverage composition]

The beverage composition according to the present disclosure comprises a polysaccharide degradation product, a vegetable oil or fat, and an alkali metal element in predetermined ranges of amounts and comprises magnesium in a predetermined range of an amount. The beverage composition according to the present disclosure having this compositional profile exerts milk flavor and body without substantially containing an animal-derived ingredient such as a dairy ingredient. Thus, the beverage composition according to the present disclosure is drinkable as a milk substitute beverage either directly or after being diluted, and in addition, can be added to a beverage such as a vegetable milk substitute beverage (plant-based milk) and utilized for improving milk flavor and body of the beverage.

The polysaccharide degradation product is a hydrolysate of a polysaccharide with heat, an acid, an alkali, an enzyme, or the like and can be composed mainly of a polysaccharide of glucose linked through α-1,4 bonds or 1,6 bonds. Preferred examples of the polysaccharide degradation product include dextrin, indigestible dextrin, isomaltodextrin, soluble starch, thin glue starch, amylodextrin, white dextrin, yellow dextrin, British gum, erythrodextrin, achrodextrin, maltodextrin, enzyme-modified maltodextrin, starch syrup, and maltose syrup, as well as reduced products thereof such as reduced indigestible dextrin, saccharified reduced starch, reduced maltose starch syrup, and reduced polydextrose. The polysaccharide degradation product may be used in combination of two or more types thereof.

The polysaccharide degradation product is more preferably dextrin, indigestible dextrin, isomaltodextrin, and/or reduced indigestible dextrin, further preferably dextrin, indigestible dextrin, and/or reduced indigestible dextrin.

Use of any one or more types selected from indigestible dextrin, reduced indigestible dextrin, and isomaltodextrin in combination with dextrin is most preferred from the viewpoint of flavor.

The weight-average molecular weight of the polysaccharide degradation product is preferably 1,500 to 18,000. The weight-average molecular weight is more preferably 2,000 to 10,000, further preferably 3,000 to 10,000, from the viewpoint of flavor.

The weight-average molecular weight is more preferably 2,000 to 7,000 from the viewpoint of stability.

The weight-average molecular weight is most preferably 3,000 to 7,000 from the viewpoint of both of flavor and stability.

The weight-average molecular weight can be measured using a GPC apparatus under the following conditions.
Column: TSKgel G2500PWXL, GMPWXL (manufactured by Tosoh Corp.)
Column temperature: 40°C
Mobile phase: 0.2 M aqueous sodium nitrate solution
Flow rate: 1.0 ml/min
Detector: differential refractometer
Sample injection volume: 200 µl
Calibration curve: pullulan standards (nine types having a molecular weight of 2,350,000 to 5,900) and glucose (molecular weight: 180)

The weight-average molecular weight (Mw) is determined according to Mw = ΣHi × Mi / Σ(Hi) (Hi: peak height, Mi: molecular weight) from the results of the GPC measurement described above.

The content of the polysaccharide degradation product in the beverage composition according to the present disclosure is preferably 1.0% by weight or more, more preferably 2.0% by weight or more, further preferably 3.0% by weight or more, most preferably 4.0% by weight or more.

When the beverage composition is a liquid, the content of the polysaccharide degradation product is preferably 15% by weight or less, more preferably 10% by weight or less, further preferably 8% by weight or less, most preferably 5.5% by weight or less.

When the beverage composition is in a solid state (which can be a powder or the like), the content of the polysaccharide degradation product is preferably 20% by weight or more, more preferably 25% by weight or more, further preferably 30% by weight or more. The content of the polysaccharide degradation product is preferably 65% by weight or less, more preferably 60% by weight or less, further preferably 50% by weight or less, most preferably 45% by weight or less.

When the content of the polysaccharide degradation product falls within this numeric range, milk-like flavor and body can be obtained. On the other hand, too large a content results in too strong body which cancels milk taste, and too small a content renders milk-like flavor and body difficult to perceive.

Preferred examples of the vegetable oil or fat include oils obtained from plants, such as coconut oil, rapeseed oil, cacao butter, coconut oil, palm oil, palm kernel oil, coconut oil, soybean oil, corn oil, sunflower oil, rice oil, and rapeseed oil, and oils or fats purified or processed therefrom by hydrogenation, transesterification, or sorting. The vegetable oil or fat may be used in combination of two or more types thereof.

The vegetable oil or fat is more preferably coconut oil, rapeseed oil, palm oil, palm kernel oil, sunflower oil, rice oil, and/or a purified or processed oil or fat thereof, further preferably hydrogenated coconut oil, purified coconut oil, hydrogenated palm kernel oil, and/or purified palm kernel oil, most preferably hydrogenated coconut oil and/or purified coconut oil.

The saturated fatty acid content of the vegetable oil or fat is preferably 60% by weight or more from the viewpoint of preventing oxidative deterioration in a beverage and from the viewpoint of body.

The content of the vegetable oil or fat in the beverage composition according to the present disclosure is preferably 0.20 to 3.0 parts by weight, more preferably 0.40 to 2.7 parts by weight, further preferably 0.60 to 1.5 parts by weight, most preferably 0.80 to 1.0 parts by weight, with respect to 1 part by weight of the polysaccharide degradation product.

When the content of the vegetable oil or fat falls within this numeric range, milk-like flavor and body are conferred. On the other hand, too large a content results in too strong oily feeling which causes poorly balanced flavor, and too small a content reduces richness and renders milk-like flavor and body difficult to perceive.

The alkali metal element is preferably sodium and/or potassium. At least sodium is preferably contained as the alkali metal element, and both of sodium and potassium are more preferably contained.

The alkali metal element is usually added as a compound such as sodium chloride, potassium chloride, disodium hydrogen phosphate, dipotassium hydrogen phosphate, sodium bicarbonate, trisodium phosphate, tripotassium phosphate, trisodium citrate, tripotassium citrate, sodium lactate, sodium L-tartrate, monosodium fumarate, or disodium succinate to the beverage composition, and its content is calculated from the formula weight of the alkali metal element in a molecule.

The alkali metal element may include those added for the purpose of pH adjustment mentioned later.

The content of the alkali metal element in the beverage composition according to the present disclosure is preferably 0.005 to 0.2 parts by weight, more preferably 0.008 to 0.11 parts by weight, further preferably 0.015 to 0.05 parts by weight, most preferably 0.02 to 0.04 parts by weight, with respect to 1 part by weight of the polysaccharide degradation product.

When the content of the alkali metal element falls within this numeric range, milk-like flavor can be obtained.

On the other hand, too large a content results in too strong salty taste, which renders milk-like flavor difficult to perceive, and too small a content renders milk-like flavor difficult to perceive.

When both of sodium and potassium are contained as the alkali metal element, their contents are preferably 0.1 to 5 parts by weight of potassium with respect to 1 part by weight of sodium.

The blending ratio of potassium to 1 part by weight of sodium is more preferably 1 to 5 parts by weight, further preferably 3 to 5 parts by weight, most preferably 3 to 4 parts by weight.

When the blending ratio of potassium to 1 part by weight of sodium falls within this numeric range, milk-like flavor is enhanced. On the other hand, too large a blending ratio, too small a blending ratio, or a blending ratio that falls below the numeric range weakens milk-like flavor.

The content of magnesium in the beverage composition according to the present disclosure is preferably 0.030 parts by weight or less, more preferably 0.025 parts by weight or less, further preferably 0.010 parts by weight or less, with respect to 1 part by weight of the polysaccharide degradation product. This content of magnesium is preferably 0.0008 parts by weight or more, more preferably 0.0010 parts by weight or more, further preferably 0.0015 parts by weight or more, particularly preferably 0.0020 parts by weight or more, most preferably 0.0025 parts by weight or more.

When magnesium is contained in this numeric range, milk-like flavor is enhanced. On the other hand, too large a content or too small a content weakens milk-like flavor.

Magnesium is usually added as a compound such as magnesium chloride, magnesium carbonate, magnesium phosphate, or magnesium sulfate to the beverage composition, and its content is calculated from the formula weight of magnesium in a molecule.

The blending ratio of magnesium to 1 part by weight of the alkali metal element is preferably 0.035 to 0.30 parts by weight, more preferably 0.035 to 0.20 parts by weight, further preferably 0.035 to 0.15 parts by weight, particularly preferably 0.035 to 0.10 parts by weight.

The beverage composition according to the present disclosure may comprise a plant-derived protein. The plant-derived protein, if contained, is preferably in a small amount.

Specific examples of the plant-derived protein include chickpea protein, soybean protein, pea protein, lentil protein, almond protein, oat protein, rice protein, and hempseed protein. The plant-derived protein may be used in combination of two or more types thereof.

When the beverage composition according to the present disclosure comprises the plant-derived protein, its content is preferably 0.1 parts by weight or less, more preferably 0.08 parts by weight or less, further preferably 0.05 parts by weight or less, with respect to 1 part by weight of the polysaccharide degradation product.

The beverage composition according to the present disclosure may comprise an emulsifier.

The emulsifier can be an emulsifier available for food products. Examples thereof include fatty acid esters such as sucrose fatty acid ester, polysorbate (polyoxyethylene sorbitan acid ester), glycerin fatty acid ester (monoglyceride, organic acid monoglyceride, and polyglycerin fatty acid ester), sorbitan fatty acid ester, and propylene glycol fatty acid ester, sodium stearoyl lactylate, calcium stearoyl lactylate, enzymatically degraded lecithin, lecithin, and saponin. One type of these emulsifiers may be used singly, or two or more types thereof may be used in combination.

The emulsifier is more preferably sucrose fatty acid ester, polyglycerin fatty acid ester, and/or organic acid monoglyceride.

The emulsifier is preferably a hydrophilic emulsifier, and the number of carbon atoms in the fatty acid of the sucrose fatty acid ester or the polyglycerin fatty acid ester for use as the hydrophilic emulsifier is preferably 12 or more, more preferably 16 or more, most preferably 18 or more. The organic acid monoglyceride for use as the hydrophilic emulsifier is preferably diacetyl tartaric acid monoglyceride and/or succinic acid monoglyceride.

The hydrophilic emulsifier has HLB of preferably 4 or more, more preferably 6 or more, and preferably 18 or less, more preferably 11 or less, from the viewpoint of stabilizing the emulsification of the beverage composition.

When the beverage composition according to the present disclosure comprises the hydrophilic emulsifier, its content is preferably 0.2 parts by weight or less, more preferably 0.1 parts by weight or less, further preferably 0.08 parts by weight or less, with respect to 1 part by weight of the vegetable oil or fat from the viewpoint of facilitating the beverage composition having good flavor without causing strange taste. The content of the hydrophilic emulsifier is preferably 0.005 parts by weight or more, more preferably 0.01 parts by weight or more, further preferably 0.03 parts by weight or more, with respect to 1 part by weight of the vegetable oil or fat from the viewpoint of stabilizing the emulsification of the beverage composition.

A hydrophobic emulsifier capable of controlling the physical properties and phase state of a lipid-soluble substance is preferably used in combination with the hydrophilic emulsifier which is soluble in water, as the emulsifier. The number of carbon atoms in the fatty acid of the sucrose fatty acid ester or the polyglycerin fatty acid ester for use as the hydrophobic emulsifier is preferably 12 or more, more preferably 16 or more, from the viewpoint of effectively controlling the physical properties and phase state of a lipid-soluble substance.

The hydrophobic emulsifier has HLB of preferably 3 or less and preferably 0 or more from the viewpoint of effectively controlling the physical properties and phase state of a lipid-soluble substance.

When the beverage composition according to the present disclosure comprises the hydrophobic emulsifier, its content is preferably 0.1 parts by weight or less, more preferably 0.8 parts by weight or less, further preferably 0.05 parts by weight or less, with respect to 1 part by weight of the vegetable oil or fat from the viewpoint of attaining the beverage composition having good flavor without causing strange taste. The content of the hydrophobic emulsifier is preferably 0.001 parts by weight or more, more preferably 0.005 parts by weight or more, further preferably 0.01 parts by weight or more, with respect to 1 part by weight of the vegetable oil or fat from the viewpoint of stabilizing the emulsification of the beverage composition.

The beverage composition according to the present disclosure may comprise a dietary fiber, a polysaccharide thickener, a sweetener, a pH adjuster, a fragrance, and the like.

Examples of the dietary fiber include water-soluble dietary fibers such as pectin, agarose, glucomannan, polydextrose, sodium arginine, inulin, carrageenan, guar gum, locust bean gum, tara gum, xanthan gum, gellan gum, fermented cellulose, pullulan, and soybean polysaccharides, and water-insoluble dietary fibers such as cellulose, lignin, chitin, and chitosan. The dietary fiber is preferably inulin from the viewpoint of being able to confer natural milk-like flavor.

Examples of the polysaccharide thickener include native gellan, xanthan gum, carrageenan, pectin, locust bean gum, gellan gum, and guar gum.

Examples of the sweetener include glucose, fructose, isomerized liquid sugar, arabinose, mannose, galactose, xylose, psicose, allose, tagatose, lactose, sucrose, maltose, trehalose, cellobiose, nigerose, isomaltose, gentibiose, palatinose, mannobiose, oligotose, fructooligosaccharide, soybean oligosaccharides, galactooligosaccharide, lactosucrose, xylooligosaccharide, raffinose, mannooligosaccharides, erythritol, maltitol, xylitol, lactitol, mannitol, sorbitol, reduced palatinose, stevia, glycyrrhiza, acesulfame K, sucralose, neotame, aspartame, and saccharin. One type of these sweeteners may be used singly, or two or more types thereof may be used in combination.

The sweetener is preferably glucose, sucrose, erythritol, and/or oligotose and is further preferably glucose, erythritol, and/or oligotose from the viewpoint of being able to confer natural sweetness.

Examples of the pH adjuster include dipotassium hydrogen phosphate, tripotassium phosphate, citric anhydride, disodium hydrogen phosphate, trisodium hydrogen phosphate, tripotassium citrate, trisodium citrate, dipotassium hydrogen citrate, disodium hydrogen citrate, sodium bicarbonate, lactic acid, and calcium lactate.

Any of various synthetic fragrances, natural fragrances, natural essential oils, plant extracts, and the like can be used as the fragrance.

The beverage composition according to the present disclosure exerts milk flavor and body without substantially containing an animal-derived ingredient such as a dairy ingredient. In this context, the phrase "without substantially containing" means that the solid content of the animal-derived ingredient is usually 0.5% by weight or less, preferably 0.3% by weight or less, more preferably 0.1% by weight or less, with respect to the total weight. Particularly preferably, the beverage composition according to the present disclosure comprises no animal-derived ingredient.

The beverage composition according to the present disclosure is drinkable as a milk substitute beverage either directly or after being diluted.

When the beverage composition according to the present disclosure is diluted for drinking, the dilution ratio can be arbitrary. For example, the beverage composition is diluted into approximately 1.5 to 10 times the volume with water so that the content of the vegetable oil or fat in the beverage is preferably 1 to 5% by weight, further preferably 1.5 to 4% by weight, with respect to the weight of the beverage, for drinking.

The beverage composition according to the present disclosure may be in a liquid or solid state.

When the beverage composition according to the present disclosure is a liquid composition, this composition is produced, for example, as follows.

First, a mixing step of mixing the polysaccharide degradation product, the vegetable oil or fat, the alkali metal element, and an optional blend component to prepare a mixed solution is performed. Water may be added, if necessary, for mixing.

Subsequently, an emulsification step of emulsifying the obtained mixed solution by stirring is performed. A homogenizing emulsification method which is usually used in food products may be used as an emulsification method. Examples thereof include a method using a homogenizer, a method using a colloid mill, and a method using a homomixer. The homogenizing emulsification treatment is usually performed under a condition of 40 to 80°C. The emulsification step may be performed only once or may be performed two or more times (a plurality of times). The emulsification step is preferably performed two or more times from the viewpoint of emulsification stability.

A preliminary emulsification step may be performed before the emulsification step. The preliminary emulsification step may be performed using a paddle mixer, a homomixer, an ultrasonic homogenizer, a colloid mill, a kneader, an inline mixer, a static mixer, Onreitor, or the like.

A sterilization treatment step such as UHT sterilization or retort sterilization may be performed after the emulsification step. The retort sterilization is usually performed under conditions of 110 to 140°C (e.g., 121°C) and 5 to 40 minutes. On the other hand, the UHT sterilization which is used for beverages for PET bottles and the like is usually ultrahigh-temperature sterilization corresponding to a higher temperature (e.g., 120 to 150°C) and a sterilizing value (Fo) of 10 to 50 at 121°C. The UHT sterilization can be performed by a known method, for example, a direct heating scheme such as a steam injection scheme of directly blowing steam into a beverage or a steam infusion scheme of heating a beverage by spraying into steam, or an indirect heating scheme using a surface heat exchanger such as a plate or a tube.

When the beverage composition according to the present disclosure is a solid composition, a method for producing this composition is not particularly limited. The composition can be produced by spray-drying or freeze-drying an emulsion obtained in the emulsification step mentioned above. For example, a spray drying method, a flash drying method, a drum drying method, a cylindrical drying method, a freeze drying method such as a vacuum freeze drying method, or a vacuum drying method can be used as a method for drying the emulsion, and a spray drying method suitable for large-scale production is preferred.

Moisture in the emulsion may be removed by the spray drying method to produce a powder composition. In such a case, the emulsion may be heated, if necessary. The powder composition obtained by the spray drying of the emulsion may be pulverized, classified, and granulated, if necessary, for example.

### [Beverage]

The beverage composition according to the present disclosure can be added to a beverage and utilized for improving milk flavor and body of the beverage. Specifically, the beverage composition according to the present disclosure is preferred as an improver for flavor and body of a beverage.

The beverage to which the beverage composition according to the present disclosure is added may be a beverage containing a dairy ingredient or may be a beverage containing no dairy ingredient and is preferably a beverage containing no dairy ingredient.

Examples of the beverage containing a dairy ingredient include: coffee, tea, cocoa, and soup with milk; and ice cream and soft-served ice cream mixes with milk.

Examples of the beverage containing no dairy ingredient include: plant-based milk, tea, coffee, cocoa, and soup; and ice cream and soft-served ice cream mixes.

The amount of the beverage composition according to the present disclosure added to the beverage is preferably 10 to 99% by weight, more preferably 20 to 80% by weight, further preferably 30 to 70% by weight.

The content of the vegetable oil or fat in the beverage supplemented with the beverage composition according to the present disclosure is preferably 1 to 5% by weight, more preferably 1.5 to 4% by weight.

When the beverage composition is drunk directly as a milk substitute beverage, the composition of the milk substitute beverage can be adjusted to the compositional range of the beverage composition of the present invention. In this case, the milk substitute beverage is a beverage comprising a polysaccharide degradation product, a vegetable oil or fat, and an alkali metal element, wherein a content of the polysaccharide degradation product is 1.0% by weight or more, 0.005 to 0.2 parts by weight of the alkali metal element are contained with respect to 1 part by weight of the polysaccharide degradation product, 0.0008 parts by weight or more and 0.030 parts by weight or less of magnesium are contained with respect to 1 part by weight of the polysaccharide degradation product, and no animal-derived ingredient is contained, or a content thereof is 0.5% by weight or less.

### [Method for producing beverage, etc.]

The method for producing a beverage and the method for improving flavor and body of a beverage according to the present disclosure comprises the step of mixing the beverage composition described above with an ingredient.

An ingredient suitable for the beverage of interest in production can be used. In the case of producing a vegetable milk substitute beverage, examples of the ingredient include coconut milk, almond milk, oat powders, rice protein, hempseed protein, soybean powders, pea protein, chickpea protein, lentil protein, broad bean protein, cashew nut pastes, walnut pastes, potato protein, and corn protein.

In the step, the emulsifier, the sweetener, and the fragrance mentioned above, an antioxidant (sodium ascorbate, etc.), and the like may be added, if necessary.

The beverage composition can be added as a powder to the ingredient. In this case, one embodiment of the production method comprises an aqueous phase preparation step of preparing an aqueous phase by mixing the powder with water and preferably further comprises an emulsification step of mixing the aqueous phase with a composition containing the vegetable oil or fat and the emulsifier for emulsification.

### Examples

### [Ingredient used]

### <Vegetable oil or fat>

Hydrogenated coconut oil (saturated fatty acid content: 99% by weight)
Purified coconut oil (saturated fatty acid content: 86% by weight)
Rapeseed oil (saturated fatty acid content: 7% by weight)

### <Emulsifier>

P-1670: sucrose palmitic acid ester "RYOTO SUGAR ESTER P-1670" manufactured by Mitsubishi Chemical Corp. (HLB: 16) SWA-10D: polyglycerin stearic acid ester "RYOTO POLYGLYESTER SWA-10D" manufactured by Mitsubishi Chemical Corp. (HLB: 16)

### <Dextrin>

Weight-average molecular weight 2999: "SANDEC #300" manufactured by Sanwa Starch Co., Ltd.
Weight-average molecular weight 3537: "SANDEC #250" manufactured by Sanwa Starch Co., Ltd.
Weight-average molecular weight 6588: "SANDEC #180" manufactured by Sanwa Starch Co., Ltd.
Weight-average molecular weight 9367: "SANDEC #150" manufactured by Sanwa Starch Co., Ltd.
Weight-average molecular weight 17000: "SANDEC #100" manufactured by Sanwa Starch Co., Ltd.
Weight-average molecular weight 20734: "SANDEC #70FN" manufactured by Sanwa Starch Co., Ltd.

### <Indigestible dextrin>

"FIBER SOL 2" manufactured by Matsutani Chemical Industry Co., Ltd. (weight-average molecular weight: 2910)

### <Reduced indigestible dextrin>

"FIBER SOL 2H" manufactured by Matsutani Chemical Industry Co., Ltd. (weight-average molecular weight: 2600)

### <Isomaltodextrin>

"Fybryxa" manufactured by Hayashibara Co., Ltd. (weight-average molecular weight: 4700)

### <Dietary fiber>

Inulin: "FujiFF" manufactured by Fuji Nihon Seito Corp.

### <Sweetener>

Granulated sugar: manufactured by Nissin Sugar Manufacturing Co., Ltd.
Anhydrous glucose: manufactured by Nihon Shokuhin Kako Co., Ltd.
Erythritol: manufactured by Mitsubishi Chemical Corp. Liquid oligotose (solid content: 70%): manufactured by Mitsubishi Chemical Corp.

### <Mineral>

Common salt
Potassium chloride (KCl)
Magnesium chloride (MgCl₂)

### <pH adjuster>

Dipotassium hydrogen phosphate
Citric anhydride
Baking soda (sodium bicarbonate)

### <Polysaccharide thickener>

Native gellan: "KELCOGEL HM" manufactured by Sumitomo Pharma Food & Chemical Co., Ltd.

### <Plant-derived protein>

Chickpea protein: "CP-AC" manufactured by Organo Foodtech Corp.
Pea protein: "S85F" manufactured by Roquette

### <Dairy ingredient>

Whole milk powder: manufactured by Yotsuba Milk Products Co., Ltd.

### <Black tea ingredient and coffee ingredient>

Black tea extract: "Black Tea AS Extract G-6888" manufactured by Takasago International Corp.
Coffee extract: "Coffee Extract COL-19" manufactured by Takasago International Corp.

### <Fragrance>

"Milk Flavor MQ-43916" manufactured by Takasago International Corp.

### <Plant-based milk ingredient>

Coconut milk: "Coconut milk" manufactured by Yuuki Food Co., Ltd.
Almond milk: "Rich Almond Milk" manufactured by Tsukuba Dairy Products Co., Ltd.
Oat powder: Dola Japan "Oat Extract 35DE"
Rice protein: "BROWN RICE PROTEIN CONCENTRATE 80%" manufactured by Sunbright Co., Ltd.

### <Antioxidant>

Sodium ascorbate

### [Examples 1 to 21 and Comparative Examples 1 to 11]

The components described in Table 1 were added so as to attain the contents described in Table 1, mixed, and dissolved. Further, water was added thereto to adjust the whole amount to 100% by weight. The oil or fat, the emulsifier, and the pea protein were mixed in advance and homogenized for use.

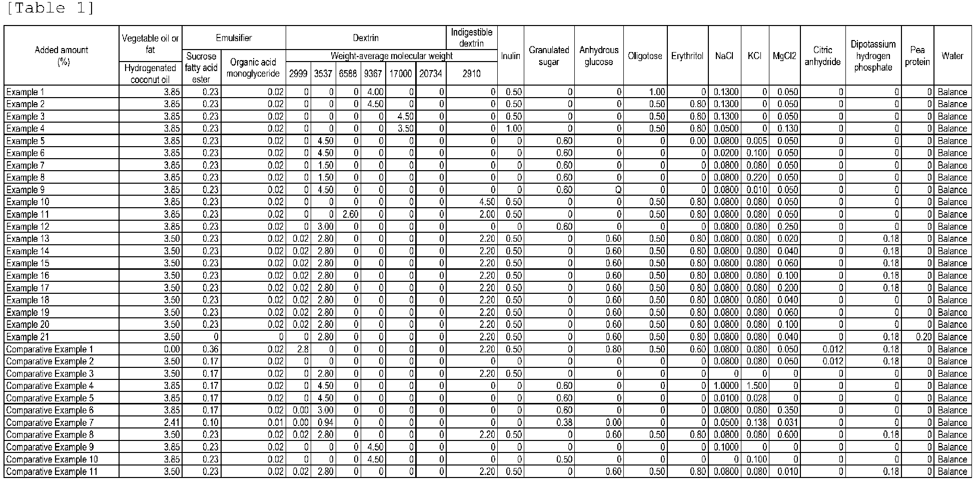

Table 2 shows the content (% by weight) of the polysaccharide degradation product in each of Examples and Comparative Examples. Table 2 also shows the vegetable oil or fat with respect to 1 part by weight of the polysaccharide degradation product, the contents (parts) of the alkali metal element (sodium and potassium) and magnesium, the content (parts) of potassium with respect to 1 part by weight of sodium, and the content (parts) of magnesium with respect to 1 part by weight of the alkali metal element.

The obtained beverages were evaluated as described below. The results are shown in Table 2.

Each prepared beverage was evaluated for its milk flavor and body by one trained panelist according to the following criteria.

### <Milk flavor>

6: Milk flavor was very strongly perceived.
5: Milk flavor was strongly perceived.
4: Milk flavor was slightly strongly perceived.
3: Milk flavor was weakly perceived.
2: Milk flavor was slightly perceived.
1: No milk flavor was perceived.

### <body>

5: Body was strongly perceived.
4: Body was slightly strongly perceived.
3: Body was weakly perceived.
2: Body was slightly perceived.
1: No body was perceived.

**[Table 2]**

| | Polysaccharide degradation product (%) | Added amount (parts) per part of polysaccharide degradation product | | | K/Na | Mg/ (Na+K) | Sensory evaluation results | |
|---|---|---|---|---|---|---|---|---|
| | | Na+K | Mg | Vegetable oil or fat | | | Milk flavor | Body |
| Example 1 | 3.82 | 0.0133 | 0.0016 | 1.01 | 0 | 0.1183 | 4 | 4 |
| Example 2 | 4.30 | 0.0118 | 0.0030 | 0.90 | 0 | 0.2564 | 4 | 4 |
| Example 3 | 4.30 | 0.0118 | 0.0030 | 0.90 | 0 | 0.2564 | 4 | 4 |
| Example 4 | 3.34 | 0.0058 | 0.0101 | 1.15 | 0 | 1.7333 | 2 | 3 |
| Example 5 | 4.34 | 0.0078 | 0.0030 | 0.89 | 0.083 | 0.3846 | 2 | 3 |
| Example 6 | 4.34 | 0.0138 | 0.0030 | 0.89 | 6.67 | 0.2174 | 2 | 3 |
| Example 7 | 1.45 | 0.0503 | 0.0090 | 2.66 | 1.33 | 0.1786 | 2 | 2 |
| Example 8 | 1.45 | 0.1006 | 0.0090 | 2.66 | 3.67 | 0.0893 | 4 | 3 |
| Example 9 | 4.34 | 0.0084 | 0.0030 | 0.89 | 0.17 | 0.3571 | 4 | 3 |
| Example 10 | 4.28 | 0.0170 | 0.0030 | 0.90 | 1.33 | 0.1786 | 3 | 4 |
| Example 11 | 4.38 | 0.0166 | 0.0030 | 0.88 | 1.33 | 0.1786 | 5 | 5 |
| Example 12 | 2.90 | 0.0251 | 0.0225 | 1.33 | 1.33 | 0.8929 | 3 | 2 |
| Example 13 | 4.81 | 0.0320 | 0.0011 | 0.73 | 3.93 | 0.0338 | 3 | 4 |
| Example 14 | 4.81 | 0.0320 | 0.0022 | 0.73 | 3.93 | 0.0676 | 6 | 5 |
| Example 15 | 4.81 | 0.0320 | 0.0032 | 0.73 | 3.93 | 0.1014 | 6 | 5 |
| Example 16 | 4.81 | 0.0320 | 0.0054 | 0.73 | 3.93 | 0.1691 | 5 | 5 |
| Example 17 | 4.81 | 0.0320 | 0.0108 | 0.73 | 3.93 | 0.3381 | 2 | 3 |
| Example 18 | 4.81 | 0.0151 | 0.0022 | 0.73 | 1.33 | 0.1429 | 5 | 5 |
| Example 19 | 4.81 | 0.0151 | 0.0032 | 0.73 | 1.33 | 0.2143 | 5 | 5 |
| Example 20 | 4.81 | 0.0151 | 0.0054 | 0.73 | 1.33 | 0.3571 | 3 | 3 |
| Example 21 | 4.79 | 0.0321 | 0.0022 | 0.73 | 3.93 | 0.0676 | 4 | 4 |
| Comparative Example 1 | 4.79 | 0.0321 | 0.0027 | 0.00 | 3.93 | 0.0845 | 2 | 1 |
| Comparative Example 2 | 0 | - | - | - | - | - | 1 | 2 |
| Comparative Example 3 | 4.79 | 0 | 0 | 0.73 | - | - | 2 | 1 |
| Comparative Example 4 | 4.34 | 0.2694 | 0 | 0.89 | 2.00 | 0 | 1 | 1 |
| Comparative Example 5 | 4.34 | 0.0043 | 0 | 0.89 | 3.73 | 0 | 1 | 1 |
| Comparative Example 6 | 2.90 | 0.0251 | 0.0314 | 1.33 | 1.33 | 1.2500 | 1 | 2 |
| Comparative Example 7 | 0.90 | 0.1006 | 0.0090 | 2.66 | 3.67 | 7605 | 1 | 1 |
| Comparative Example 8 | 4.81 | 0.0320 | 0.0324 | 0.73 | 3.93 | 12168 | 1 | 2 |
| Comparative Example 9 | 4.30 | 0.0091 | 0 | 0.90 | 0 | 0 | 2 | 2 |
| Comparative Example 10 | 4.30 | 0.0121 | 0 | 0.90 | - | 0 | 2 | 2 |
| Comparative Example 11 | 4.81 | 0.0320 | 0.0005 | 0.73 | 3.93 | 0.0169 | 2 | 2 |

### [Examples 22 to 38]

The components described in Table 3 were added so as to attain the contents described in Table 3, mixed, and dissolved. Further, water was added thereto to adjust the whole amount to 100% by weight. This liquid was heated to 65°C, homogenized twice at a pressure of 20 MPa in a high-pressure homogenizer, and then filled into a can container, which was then hermetically sealed and retort-sterilized to prepare a canned beverage.

The pH of the beverage thus sterilized was 5.4 to 5.9 in Examples 22 to 27 and 29 and 6.5 to 6.8 in Examples 28 and 30 to 38. The median diameter of oil droplets dispersed in the beverage was 0.25 to 0.40 µm in Examples 22, 24 to 28, and 30 to 38, 5.43 µm in Example 23, and 1.67 µm in Example 29.

### [Examples 39 and 40]

The components described in Table 3 were added so as to attain the contents described in Table 3, mixed, and dissolved. Further, water was added thereto to adjust the whole amount to 100% by weight. This liquid was heated to 65°C, homogenized twice at a pressure of 20 MPa in a high-pressure homogenizer, then UHT-sterilized, and then aseptically filled into a PET bottle to prepare a PET-bottled beverage.

The pH of the beverage thus sterilized was 7.0 to 7.2, and the median diameter of oil droplets dispersed in the beverage was 0.30 to 0.40 µm.

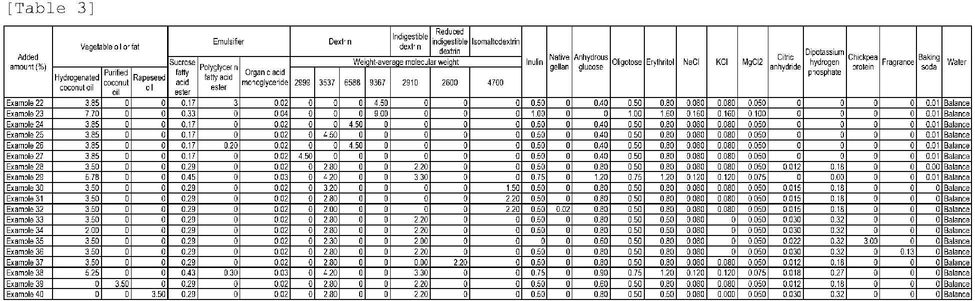

Table 4 shows the content (% by weight) of the polysaccharide degradation product in each Example. Table 4 also shows the vegetable oil or fat with respect to 1 part by weight of the polysaccharide degradation product, the contents (parts) of the alkali metal element (sodium and potassium) and magnesium, the content (parts) of potassium with respect to 1 part by weight of sodium, and the content (parts) of magnesium with respect to 1 part by weight of the alkali metal element.

Each obtained beverage was evaluated for its milk flavor and body in the same manner as in Examples 1 to 21. The flavor evaluation was conducted by 2-fold dilution with water in Example 23, by 1.5-fold dilution with water in Examples 29 and 38, and without dilution in the other Examples. The results are shown in Table 4.

Each canned beverage was stored at 4°C for 4 weeks, and the liquid contained therein was transferred to a cup. In this respect, the status of generation of oil particles was visually observed, and stability was evaluated according to the criteria given below. The results are shown in Table 4.

### <Stability>

3: Very few oil particles were present, or no oil particles were present.
2: A small amount of oil particles was present.
1: A large amount of oil particles was present.

**[Table 4]**

| | Polysaccharide degradation product (%) | Added amount (parts) per part of polysaccharide degradation product | | | K/Na | Mg/ (Na+K) | Sensory evaluation results | | Stability |
|---|---|---|---|---|---|---|---|---|---|
| | | Na+K | Mg | Vegetable oil or fat | | | Milk flavor | Body | |
| Example 22 | 4.30 | 0.0175 | 0.0030 | 0.90 | 1.23 | 0.1724 | 5 | 5 | 1 |
| Example 23 | 8.60 | 0.0172 | 0.0030 | 0.90 | 1.28 | 0.1754 | 5 | 5 | 1 |
| Example 24 | 4.30 | 0.0175 | 0.0030 | 0.90 | 1.23 | 0.1724 | 5 | 5 | 2 |
| Example 25 | 4.34 | 0.0174 | 0.0030 | 0.89 | 1.23 | 0.1724 | 5 | 5 | 3 |
| Example 26 | 4.30 | 0.0175 | 0.0030 | 0.90 | 1.23 | 0.1724 | 5 | 5 | 3 |
| Example 27 | 4.34 | 0.0174 | 0.0030 | 0.89 | 1.23 | 0.1724 | 4 | 4 | 3 |
| Example 28 | 4.79 | 0.0321 | 0.0027 | 0.73 | 3.93 | 0.0845 | 6 | 5 | 3 |
| Example 29 | 7.19 | 0.0156 | 0.0027 | 0.80 | 1.26 | 0.1744 | 5 | 5 | 3 |
| Example 30 | 4.52 | 0.0340 | 0.0029 | 0.77 | 3.93 | 0.0845 | 5 | 5 | 3 |
| Example 31 | 4.80 | 0.0320 | 0.0027 | 0.73 | 3.93 | 0.0845 | 5 | 4 | 3 |
| Example 32 | 4.03 | 0.0382 | 0.0032 | 0.87 | 3.93 | 0.0845 | 5 | 5 | 3 |
| Example 33 | 4.79 | 0.0366 | 0.0027 | 0.73 | 4.62 | 0.0742 | 6 | 5 | 3 |
| Example 34 | 4.79 | 0.0366 | 0.0027 | 0.42 | 4.62 | 0.0742 | 6 | 4 | 3 |
| Example 35 | 4.12 | 0.0425 | 0.0032 | 0.85 | 4.62 | 0.0742 | 4 | 4 | 3 |
| Example 36 | 4.79 | 0.0366 | 0.0027 | 0.73 | 4.62 | 0.0742 | 5 | 4 | 3 |
| Example 37 | 4.79 | 0.0321 | 0.0027 | 0.73 | 3.93 | 0.0845 | 6 | 5 | 3 |
| Example 38 | 7.19 | 0.0321 | 0.0027 | 0.73 | 3.93 | 0.0845 | 6 | 5 | 3 |
| Example 39 | 4.79 | 0.0321 | 0.0027 | 0.73 | 3.93 | 0.0845 | 6 | 5 | 3 |
| Example 40 | 4.79 | 0.0366 | 0.0027 | 0.73 | 4.62 | 0.0742 | 5 | 3 | 3 |

### [Examples 41 to 44]

The components described in Table 5 were added so as to attain the contents described in Table 5, mixed, and dissolved. Further, water was added thereto to adjust the whole amount to 100% by weight. This liquid was heated to 65°C, homogenized once at a pressure of 20 MPa in a high-pressure homogenizer, and then retort-sterilized to prepare a canned beverage.

The pH of the beverage thus sterilized was 6.6 to 7.1, and the median diameter of oil droplets dispersed in the beverage was 0.18 to 0.3 µm.

### [Examples 45 to 48]

The components described in Table 5 were added so as to attain the contents described in Table 5, mixed, and dissolved. Further, water was added thereto to adjust the whole amount to 100% by weight.

**[Table 5]**

| Added amount (%) | Beverage prepared in Example 26 | Beverage prepared in Example 31 | Black tea extract | Coffee extract | Coconut milk | Almond milk | Oat powder | Rice protein | Sucrose fatty acid ester | Polyglycerin fatty acid ester | Sodium ascorbate | Granulated sugar | Baking soda | Water |
|---|---|---|---|---|---|---|---|---|---|---|---|---|---|---|
| | | | | | | | | | P-1670 | SWA-10D | | | | |
| Example 41 | 0 | 30 | 3.33 | 0 | 0 | 0 | 0 | 0 | 0 | 0 | 0.04 | 5.00 | 0.12 | Balance |
| Example 42 | 0 | 30 | 3.33 | 0 | 0 | 0 | 0 | 0 | 0.06 | 0.1 | 0.04 | 5.00 | 0.12 | Balance |
| Example 43 | 0 | 30 | 0 | 2.5 | 0 | 0 | 0 | 0 | 0.06 | 0 | 0 | 4.00 | 0.12 | Balance |
| Example 44 | 0 | 30 | 0 | 2.5 | 0 | 0 | 0 | 0 | 0.06 | 0 | 0 | 0.00 | 0.12 | Balance |
| Example 45 | 50 | 0 | 0 | 0 | 2.5 | 0 | 0 | 0 | 0 | 0 | 0 | 0 | 0.10 | Balance |
| Example 46 | 50 | 0 | 0 | 0 | 0 | 5 | 0 | 0 | 0 | 0 | 0 | 0 | 0 | Balance |
| Example 47 | 50 | 0 | 0 | 0 | 0 | 0 | 2.5 | 0 | 0 | 0 | 0 | 0 | 0 | Balance |
| Example 48 | 50 | 0 | 0 | 0 | 0 | 0 | 0 | 3 | 0 | 0 | 0 | 0 | 0 | Balance |

As a result of evaluating the canned beverages of Examples 41 and 42 for their flavor on the day following sterilization, good milk tea-like flavor was perceived. Each canned beverage was stored at 4°C or 55°C for 6 weeks, and the liquid contained therein was then transferred to a cup. In this respect, the status of generation of oil particles was visually observed. As a result, few oil particles were present, and a stable emulsified state was confirmed.

As a result of evaluating the canned beverages of Examples 43 and 44 for their flavor on the day following sterilization, good milk coffee-like flavor was perceived.

As a result of evaluating the beverage of Example 45 for its flavor, good flavor of a coconut milk beverage with strong milk flavor was perceived.

As a result of evaluating the beverage of Example 46 for its flavor, good flavor of an almond milk beverage with strong milk flavor was perceived.

As a result of evaluating the beverage of Example 47 for its flavor, good flavor of an oat milk beverage with strong milk flavor was perceived.

As a result of evaluating the beverage of Example 48 for its flavor, good flavor of a rice milk beverage with strong milk flavor was perceived.

### [Reference Examples 1 to 4]

The components described in Table 6 were added so as to attain the contents described in Table 6, mixed, and dissolved. Further, water was added thereto to adjust the whole amount to 100% by weight. The oil or fat and the emulsifier were mixed in advance and homogenized for use. Table 7 shows the content (% by weight) of the polysaccharide degradation product in each Example. Table 7 also shows the vegetable oil or fat with respect to 1 part by weight of the polysaccharide degradation product, the contents (parts) of the alkali metal element (sodium and potassium) and magnesium, the content (parts) of potassium with respect to 1 part by weight of sodium, and the content (parts) of magnesium with respect to 1 part by weight of the alkali metal element.

Each obtained beverage was evaluated for its milk flavor and body in the same manner as in Examples 1 to 21. The results are shown in Table 7.

**[Table 6]**

| Added amount (%) | Whole milk powder | Oil or fat | Sucrose fatty acid ester | Organic acid monoglyceride | Dextrin | Inulin | Native gellan | Anhydrous glucose | Oligotose | Erythritol | NaCl | KCl | MgCl2 | Dipotassium hydrogen phosphate | Water |
|---|---|---|---|---|---|---|---|---|---|---|---|---|---|---|---|
| | | | | | Weight-average molecular weight | | | | | | | | | | |
| | | Hydrogenated coconut oil | | | 3537 | | | | | | | | | | |
| Reference Example 1 | 1.5 | 3.0 | 0.2 | 0.02 | 0 | 0.5 | 0 | 0.6 | 0.5 | 0.8 | 0.08 | 0.08 | 0.04 | 0.18 | Balance |
| Reference Example 2 | 1.5 | 3.0 | 0.2 | 0.02 | 0.5 | 0.5 | 0 | 0.6 | 0.5 | 0.8 | 0.08 | 0.08 | 0.04 | 0.18 | Balance |
| Reference Example 3 | 1.0 | 3.0 | 0.2 | 0.02 | 0.5 | 0.5 | 0 | 0.6 | 0.5 | 0.8 | 0.08 | 0.08 | 0.04 | 0.18 | Balance |
| Reference Example 4 | 1.5 | 3.0 | 0.2 | 0.02 | 4.0 | 0.5 | 0 | 0.6 | 0.5 | 0.8 | 0.00 | 0.00 | 0.00 | 0.18 | Balance |

**[Table 7]**

| | Polysaccharide degradation product | Weight per part of polysaccharide degradation product | | | K/Na | Mg/ (Na+K) | Sensory evaluation results | | Mg/ Na+K |
|---|---|---|---|---|---|---|---|---|---|
| | | Na+K | Mg | Plant fat | | | Milk flavor | Body | |
| Reference Example 1 | 0 | - | - | - | - | - | 5 | 3 | 0.062911 |
| Reference Example 2 | 0.4825 | 0.3881 | 0.0244 | 2.0000 | 3.9734 | 0.063 | 5 | 4 | 0.062911 |
| Reference Example 3 | 0.4825 | 0.3650 | 0.0235 | 6.2176 | 3.9606 | 0.064 | 4 | 2 | 0.064282 |
| Reference Example 4 | 3.8600 | 0.0297 | 0.0004 | 0.7772 | 16.7442 | 0.012 | 5 | 3 | 0.012058 |

These results supported that excellent flavor was obtained in Examples 1 to 48.

By contrast, flavor was poor in all of Comparative Example 1 containing no vegetable oil or fat, Comparative Example 2 containing no polysaccharide degradation product, Comparative Example 7 having a small content of the polysaccharide degradation product, Comparative Example 3 containing no alkali metal, Comparative Example 5 having a small alkali metal content with respect to the polysaccharide degradation product, Comparative Example 4 having a large alkali metal content, Comparative Examples 9 and 10 containing no magnesium, Comparative Example 11 having a low magnesium content with respect to the polysaccharide degradation product, and Comparative Examples 6 and 8 having a large magnesium content with respect to the polysaccharide degradation product.

Example 9 supported that 0.1 to 5 parts by weight of potassium contained with respect to 1 part by weight of sodium can further improve flavor over Example 5 having less than 0.1 parts by weight of potassium or Example 6 having more than 5 parts by weight of potassium with respect to 1 part by weight of sodium.

Examples 14 to 16, 18, and 19 supported that magnesium contained at a blending ratio of 0.035 to 0.3 parts by weight with respect to 1 part by weight of the alkali metal element can further improve flavor over Example 13 having a magnesium blending ratio of less than 0.035 parts by weight with respect to 1 part by weight of the alkali metal element or Examples 17 and 20 having a magnesium blending ratio of more than 0.3 parts by weight with respect to 1 part by weight of the alkali metal element.

Examples 28 and 39 supported that hydrogenated coconut oil or purified coconut oil having a high saturated fatty acid content is superior to rapeseed oil having a high unsaturated fatty acid content used in Example 40 from the viewpoint of body.

From Reference Examples 1 to 3, it is evident that, when containing 1 to 1.5% by weight of the whole milk powder, a beverage excellent from the viewpoint of milk flavor and body can be prepared even if the content of the polysaccharide degradation product is small. From Reference Example 4, it is evident that, when containing 1.5% by weight of the whole milk powder, a beverage excellent from the viewpoint of milk flavor and body can be prepared even if the magnesium content is small.

## Claims

1. A beverage composition comprising a polysaccharide degradation product, a vegetable oil or fat, and an alkali metal element, wherein
a content of the polysaccharide degradation product is 1.0% by weight or more,
0.005 to 0.2 parts by weight of the alkali metal element are contained with respect to 1 part by weight of the polysaccharide degradation product,
0.0008 parts by weight or more and 0.030 parts by weight or less of magnesium are contained with respect to 1 part by weight of the polysaccharide degradation product, and
no animal-derived ingredient is contained, or a content thereof is 0.5% by weight or less.

2. The beverage composition according to claim 1, wherein 0.20 to 3.0 parts by weight of the vegetable oil or fat are contained with respect to 1 part by weight of the polysaccharide degradation product.

3. The beverage composition according to claim 1 or 2, wherein a ratio of magnesium to 1 part by weight of the alkali metal element is 0.035 to 0.30 parts by weight.

4. The beverage composition according to claim 2 or 3, wherein the alkali metal element is sodium and/or potassium.

5. The beverage composition according to claim 2 or 3, wherein the alkali metal element contains sodium and potassium and contains 0.1 to 5 parts by weight of potassium with respect to 1 part by weight of sodium.

6. The beverage composition according to claim 2 or 3, wherein 0.0015 parts by weight or more of magnesium are contained with respect to 1 part by weight of the polysaccharide degradation product.

7. The beverage composition according to claim 2 or 3, wherein no plant-derived protein is contained, or 0.1 parts by weight or less of a plant-derived protein are contained with respect to 1 part by weight of the polysaccharide degradation product.

8. The beverage composition according to claim 1 or 2, wherein a weight-average molecular weight of the polysaccharide degradation product is 1,500 to 18,000.

9. The beverage composition according to claim 1 or 2, wherein the polysaccharide degradation product is dextrin, indigestible dextrin, reduced indigestible dextrin, and/or isomaltodextrin.

10. The beverage composition according to claim 1 or 2, wherein a saturated fatty acid content of the vegetable oil or fat is 60% by weight or more.

11. The beverage composition according to claim 10, wherein the vegetable oil or fat is coconut oil, palm kernel oil, and/or a hydrogenated, transesterified, or sorted form thereof.

12. The beverage composition according to claim 1 or 2, further comprising an emulsifier.

13. The beverage composition according to claim 10, wherein the emulsifier is sucrose fatty acid ester and/or polyglycerin fatty acid ester.

14. A beverage comprising a beverage composition according to claim 1.

15. The beverage according to claim 14, wherein a content of the vegetable oil or fat is 1 to 5% by weight.

16. The beverage according to claim 15, wherein the beverage is plant-based milk, tea, coffee, or cocoa.

17. A method for producing a beverage, comprising the step of mixing a beverage composition with an ingredient,
the beverage composition comprising
a polysaccharide degradation product, a vegetable oil or fat, and an alkali metal element,
wherein
a content of the polysaccharide degradation product is 1.0% by weight or more,
0.005 to 0.2 parts by weight of the alkali metal element are contained with respect to 1 part by weight of the polysaccharide degradation product,
0.0008 parts by weight or more and 0.030 parts by weight or less of magnesium are contained with respect to 1 part by weight of the polysaccharide degradation product, and
no animal-derived ingredient is contained, or a content thereof is 0.5% by weight or less.

18. A method for improving flavor and body of a beverage, comprising the step of mixing a beverage composition with the beverage and/or an ingredient thereof,
the beverage composition comprising
a polysaccharide degradation product, a vegetable oil or fat, and an alkali metal element,
wherein
a content of the polysaccharide degradation product is 1.0% by weight or more,
0.005 to 0.2 parts by weight of the alkali metal element are contained with respect to 1 part by weight of the polysaccharide degradation product,
0.0008 parts by weight or more and 0.030 parts by weight or less of magnesium are contained with respect to 1 part by weight of the polysaccharide degradation product, and
no animal-derived ingredient is contained, or a content thereof is 0.5% by weight or less.

19. The beverage composition according to claim 1, wherein the beverage composition is an improver for flavor and body of a beverage.
